# EUROPÄISCHE PATENTSCHRIFT

(11) **EP 0 732 241 B1**
(45) Veröffentlichungstag und Bekanntmachung des Hinweises auf die Patenterteilung: **10.05.2000**
(21) Anmeldenummer: 96100408.2
(22) Anmeldetag: 12.01.1996
(51) Int. Cl.: B60R 25/02

(54) **Verriegelungsvorrichtung für Kraftfahrzeuge**
Locking device for a vehicle
Dispositif de verrouillage pour véhicules

(30) Priorität: 16.03.1995 DE 19509097
(43) Veröffentlichungstag der Anmeldung: 18.09.1996
(73) Patentinhaber: VALEO GmbH & Co Schliesssysteme KG, 42579 Heiligenhaus (DE)
(72) Erfinder: Lieb, Kurt, D-63500 Seligenstadt (DE); Richter, Martin, D-60385 Frankfurt (DE); Kalesse, Michael, D-40885 Ratingen (DE)
(74) Vertreter: Podszus, Burghart, Dipl.-Phys., Dipl.-Wirtsch.-Ing.

(56) Entgegenhaltungen:
- DE-C- 3 739 172
- US-A- 4 907 427

## Beschreibung

Die Erfindung betrifft eine Verriegelungsvorrichtung für Kraftfahrzeuge, bei der zur Verriegelung mindestens ein Sperrelement in eine entsprechende am äußeren Umfang der Lenkspindel des Kraftfahrzeuges angeordnete Ausnehmung eingreift, gemäß den Merkmalen des Oberbegriffs des Anspruchs 1.

Es ist seit langem bekannt, Kraftfahrzeuge gegen Diebstahl dadurch zu sichern, daß ein als Sperrelement verwendeter Bolzen in eine Ausnehmung der Lenkspindel der Lenksäule eingreift und diese blockiert. Die Betätigung des Sperrbolzens erfolgt dabei üblicherweise über ein mit dem Zündschloß verbundenes Gestänge, so daß bei entsprechender Drehung des Zündschlüssels sich ebenfalls der Sperrbolzen in die Ausnehmung der Lenkspindel hinein- oder herausbewegt.

Nachteilig ist bei derartigen bekannten Verriegelungsvorrichtungen vor allem, daß die Verriegelungsvorrichtung und das Zündschloß in der Regel eine Einheit bilden und daher relativ voluminös und sperrig ausgebildet sind und somit den Knieraum des Fahrers entsprechend begrenzen.

Aus der DE 37 39 172 C1 ist ein Schließsystem für Kraftfahrzeuge bekannt, bei dem das Zündschloß und die Verriegelungsvorrichtung räumlich getrennt voneinander angeordnet werden können, weil der Sperrbolzen nicht über ein Gestänge mit dem Schließzylinder verbunden ist, sondern mit diesem elektrisch gekoppelt ist. Bei Drehung des Zündschlüssels betätigt dabei ein in der Verriegelungsvorrichtung angeordneter Elektromotor eine Spindel, die ihrerseits eine Zahnstange verschiebt, an welcher der Sperrbolzen befestigt ist. Aus Sicherheitsgründen sind allerdings Schließzylinder und Verriegelungsvorrichtung zusätzlich noch über ein mechanisches Bindeglied, welches im wesentlichen aus einem Bcwdenzug besteht, miteinander verbunden. Durch diese Sicherheitsvorrichtung wird verhindert, daß der Sperrbolzen durch eine Fehlsteuerung während der Fahrt elektrisch eingerastet werden kann, oder daß das Fahrzeug gestartet wird, während der Sperrbolzen irrtümlich noch in seiner Blockierstellung steht.

Nachteilig ist auch bei dieser Verriegelungsvorrichtung, daß sie ebenfalls relativ aufwendig aufgebaut ist.

Der Erfindung liegt die Aufgabe zugrunde, eine Verriegelungsvorrichtung der eingangs erwähnten Art anzugeben, die kompakt aufgebaut ist und bei der trotzdem sichergestellt ist, daß eine Manipulation an dem die Startereinheit und die Verriegelungsvorrichtung verbindenden mechanischen Bindeglied nicht zum Ausschalten der Lenkungsblockierung führt.

Diese Aufgabe wird erfindungsgemäß durch die Merkmale des des Anspruchs 1 gelöst. Weitere besonders vorteilhafte Ausgestaltungen der Erfindung offenbaren die Unteransprüche.

Der Erfindung liegt im wesentlichen der Gedanke zugrunde, daß das die Startereinheit und die Verriegelungsvorrichtung verbindende mechanische Bindeglied derart mit dem Sperrelement verbindbar ist, daß Sperrelement und Bindeglied nach Abzug des Schlüssels (Sperrstellung des Sperrelementes) aus der Startereinheit außer Eingriff gebracht werden, daß also eine Bewegung des Bindegliedes in diesem Fall keine entsprechende Bewegung des Sperrelementes mehr bewirkt.

Realisiert wird dieses dadurch, daß an dem Sperrelement ein wippenförmiger Schwenkhebel (im folgenden auch als Wippe bezeichnet) angeordnet ist. In ihrer ersten Endstellung verbindet dabei die Wippe das Sperrelement mit dem Bindeglied, wobei entsprechende Formschlußteile ineinander eingreifen. In ihrer zweiten Endstellung hingegen wird die Wippe derart verschwenkt, daß die Formschlußverbindung (und/oder Kraftschlußverbindung) zwischen Wippe und Bindeglied aufgehoben ist. Die Schwenkbewegung kann vorzugsweise durch einen Elektromagneten bewirkt werden, der ein Sperrglied (z.B. einen Bolzen) entlang einer Führungsschräge der Wippe verschiebt.

Um sicherzustellen, daß es nach Ausfall des Bindegliedes nicht zu einer Gefährdung durch ein während der Fahrt einrastendes Lenkschloß kommt, weisen das Sperrelement und/oder der Schwenkhebel Rastelemente auf, in die das Sperrglied des Elektromagneten in der Fahrtstellung eingreift.

Das Erreichen der jeweiligen Endlagen des Sperrelementes wird vorzugsweise durch mit einer Elektronik verbundene Mikroschalter überwacht.

Weitere Einzelheiten und Vorteile der Erfindung ergeben sich aus dem folgenden anhand von Figuren erläuterten Ausführungsbeispiel. Es zeigen:
- Fig.1: den Längsschnitt durch eine an einer Lenksäule befestigte Verriegelungsvorrichtung, die über einen Bowdenzug mit einer Startereinheit verbunden ist, in der Sperrstellung des Sperrelementes;
- Fig.2: einen Querschnitt entlang der in Fig.1 mit II-II bezeichneten Schnittlinie;
- Fig.3: den Fig.1 entsprechenden Längsschnitt in Fahrtstellung des Sperrelementes und
- Fig.4: einen Querschnitt entlang der in Fig.3 mit IV-IV bezeichneten Schnittlinie.

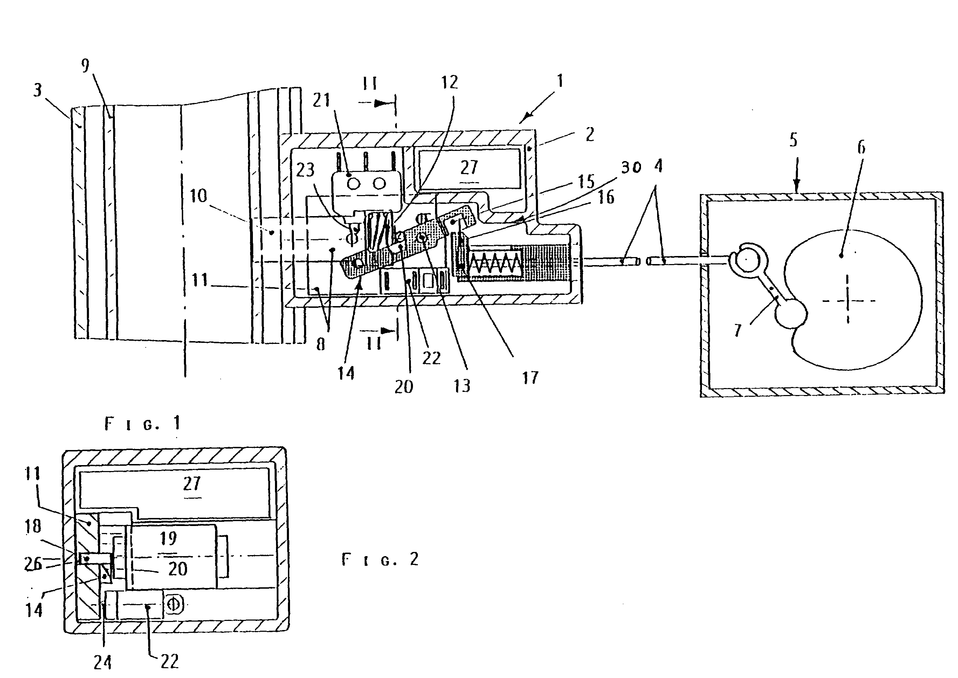

In Fig.1 ist mit 1 eine erfindungsgemäße Verriegelungsvorrichtung bezeichnet, deren Gehäuse 2 an der Lenksäule 3 eines Kraftfahrzeuges befestigt ist. Die Verriegelungsvorrichtung 1 ist über einen Bowdenzug 4 mit einer Startereinheit 5 verbunden, von der aus Übersichtlichkeitsgründen lediglich ein von dem jeweiligen Zündschlüssel betätigbarer Steuernocken 6 und ein mit dem Bowdenzug 4 verbundener und von dem Steuernocken 6 geführter Hebel 7 dargestellt ist.

Die Verriegelungsvorrichtung 1 enthält ein Sperrelement 8, welches aus einem der Lenkspindel 9 des Kraftfahrzeuges zugewandten Sperrbolzen 10 und einem Mitnehmerteil 11 besteht, wobei sich der Sperrbolzen 10 über eine Feder 12 an dem Mitnehmerteil 11 abstützt und durch dieses Teil geführt wird. An dem Mitnehmerteil 11 ist ein um eine Drehachse 13 schwenkbarer wippenförmiger Schwenkhebel (im folgenden auch als Wippe bezeichnet) 14 gelagert. Die Wippe 14 weist auf ihrer dem Bowdenzug 4 zugewandten Seite eine Ausnehmung 15 auf, in die ein Nocken 16 eines mit dem Bowdenzug 4 verbundenen Schiebestückes 17 eingreift, sobald die Wippe 14 aus der in Fig.1 dargestellten Sperrstellung herausgeschwenkt wird.

In der Sperrstellung wird die Wippe 14 durch ein Sperrglied 18 gehalten, welches durch einen Elektromagneten (Hubmagnet) 19 verschoben werden kann (Fig.2). Die Wippe 14 weist außerdem eine Führungsschräge 20 auf, deren Funktion nachfolgend noch erläutert wird.

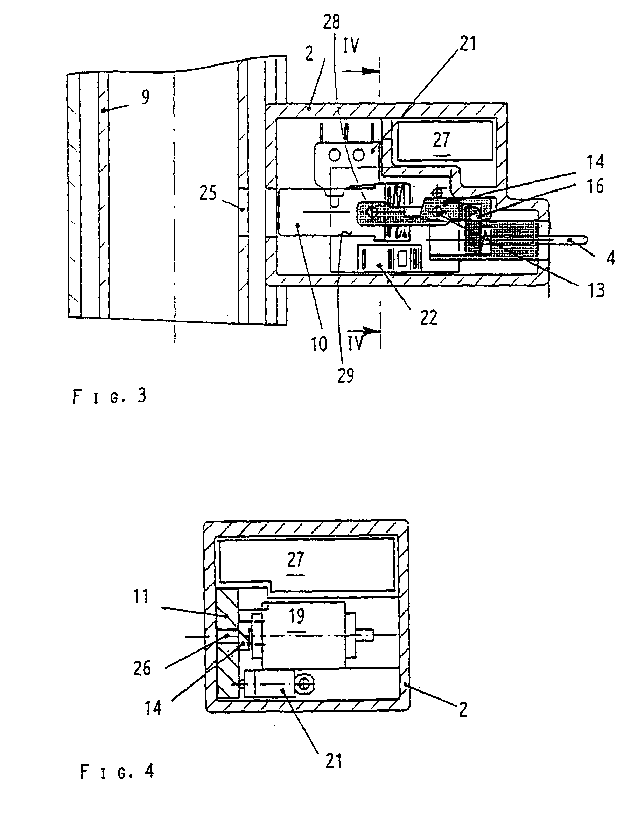

In den Fig.1 und 3 sind ferner mit 21 und 22 zwei Mikroschalter bezeichnet, die über entsprechende Schaltnocken 23, 24 die jeweiligen Endlagen der Wippe 14 bzw. die jeweilige Lage des Mitnehmers 11 überwachen und deren Funktion ebenfalls nachfolgend noch erläutert wird.

Bei abgezogenem Zündschlüssel ist der Mitnehmer 11 in die linke Endstellung geschoben (Fig.1). Der Sperrbolzen 10 ist in die dafür vorgesehene Ausnehmung 25 der Lenkspindel 9 eingetaucht. Beide Mikroschalter 21, 22 sind in dieser Ausgangslage nicht betätigt. Das Sperrglied 18 ist ausgefahren und blokkiert sowohl die Wippe 14 in ihrer Stellung als auch den Mitnehmer 11 in seiner Lage, wobei das Sperrglied in eine Ausnehmung 26 des Mitnehmers eingreift (Fig.2).

Beim Einstecken des Zündschlüssels (nicht dargestellt) in die Startereinheit 5 wird ein Signal an die z.B. ebenfalls in dem Gehäuse 2 der Verriegelungsvorrichtung 1 untergebrachte Elektronik 27 übermittelt, welches den Elektromagneten 19 ansteuert und das Zurückziehen des Sperrgliedes 18 bewirkt. Dadurch schwenkt die federbelastete Wippe 14 in ihre erste Endstellung, wobei sie die Verbindung zum Schiebestück 17 des Bowdenzuges 4 herstellt. Gleichzeitig betätigt die Wippe den Mikroschalter 21, der die Schlüsseldrehbewegung in der Startereinheit 5 freigibt. Durch Drehen des Schlüssels und damit des Steuernockens 6 wird der Bowdenzug 4 gezogen, welcher durch die formschlüssige Mitnahme der Wippe 14 gleichzeitig den Mitnehmer 11 und den darin befestigten Sperrbolzen 10 bewegt (Fig.3). Weiterhin verhindern eine entsprechende Ausformung 30 des Gehäuses 2 und die Gestaltung der Wippe 14 und des Nockens 16 ein Lösen der Verbindung zwischen Bindeglied (Bowdenzug) 4 und Sperrelement 8 in der Fahrtstellung. Dadurch ist der Sperrbolzen 10 gesichert.

Nach einem festgelegten Hub (von z.B. 8mm) überfährt der Mitnehmer 11 den Mikroschalter 22 und ermöglicht den Startvorgang des Fahrzeuges. Gleichzeitig wird durch dieses Signal der Elektromagnet 19 angesteuert. Dieser sichert durch Ausfahren des Sperrgliedes 18 die Lage der Wippe 14 in der Fahrtstellung des Mitnehmers 11 und des Sperrbolzens 10, indem das Sperrglied 18 in eine entsprechende Ausnehmung 28 der Wippe 14 und des Sperrbolzens 10 eingreift.

Der Verriegelungsvorgang wird durch das Zurückdrehen des Schlüssels und damit des Steuernockens 6 eingeleitet. Eine Verschiebung des Mitnehmers 11 darf allerdings erst erfolgen, nachdem der Zündschlüssel abgezogen ist. Dieses wird dadurch realisiert, daß der Elektromagnet 19 den Mitnehmer 11 blockiert, obwohl der Bowdenzug 4 bereits in der Startereinheit 5 entlastet wurde. Der erforderliche Impuls wird beim Abziehen des Schlüssels aus der Startereinheit 5 ausgelöst.

Durch die Freigabe der Wippe 14 und des Mitnehmers 11 kann die Einheit, bestehend aus Sperrbolzen 10, Mitnehmer 11 und Wippe 14, die Verschiebung in die Sperrstellung ausführen. Dabei wird der Mikroschalter 22 überfahren und steuert den Elektromagneten 19 an. Dieser verschiebt das Sperrglied 18, welches die Wippe 14 über die an ihr vorhandene Führungsschräge 20 in ihre zweite Endstellung verdreht und bringt damit das Schiebestück 17 des Bowdenzuges 4 außer Eingriff. Durch Verdrehen der Wippe 14 wird auch der Mikroschalter 21 entlastet.

Sollte der Sperrbolzen 10 durch eine ungünstige Lenkradstellung während des Verriegelungsvorganges nicht in die dafür vorgesehene Ausnehmung 25 der Lenkspindel 9 eingetaucht sein, so weicht dieser in eine dafür vorgesehene Öffnung 29 im Mitnehmer 11 aus (Fig.3). Bei späterer Bewegung des Lenkrades springt der Sperrbolzen 10 durch den Druck der Feder 12 in die Ausnehmung 25. Dadurch wird eine Blockierungssituation während des Verriegelungsvorganges verhindert.

Die Erfindung ist selbstverständlich nicht auf das beschriebene Ausführungsbeispiel beschränkt. So kann beispielsweise der Hubmagnet federbelastet arbeiten, muß dann jedoch in ausgefahrener Stellung immer bestromt sein. Alternativ kann er aber auch als bistabiles Bauteil mit zwei definierten Endstellungen ausgelegt sein.

Wahlweise zu der vorstehend erwähnten Schlüsselabzugssicherung, bei der das Sperrglied 18 den Mitnehmer 11 so lange blockiert, bis der Zündschlüssel abgezogen ist, kann auch eine herkömmliche mechanische Schlüsselabzugssicherung eingesetzt werden. Dadurch entfällt die radiale Belastung des Sperrgliedes 18 während der Hubbewegung.

### Bezugszeichenliste

- 1: Verriegelungsvorrichtung
- 2: Gehäuse
- 3: Lenksäule
- 4: Bindeglied, Bowdenzug
- 5: Startereinheit
- 6: Steuernocken
- 7: Hebel
- 8: Sperrelement
- 9: Lenkspindel
- 10: Sperrbolzen
- 11: Mitnehmer
- 12: Feder
- 13: Drehachse
- 14: Hebel, Schwenkhebel, Wippe
- 15: Ausnehmung
- 16: Nocken
- 17: Schiebestück
- 18: Sperrglied
- 19: Elektromagnet, Hubmagnet
- 20: Führungsschräge
- 21,22: Mikroschalter
- 23,24: Schaltnocken
- 25: Ausnehmung
- 26: Ausnehmung
- 27: Elektronik
- 28: Ausnehmung
- 29: Öffnung
- 30: Ausformung

## Patentansprüche

1. Verriegelungsvorrichtung für Kraftfahrzeuge, bei der zur Verriegelung mindestens ein Sperrelement (8), welches in einer Sperrstellung in eine entsprechende am äußeren Umfang der Lenkspindel (9) der Lenksäule (3) des Kraftfahrzeuges angeordnete Ausnehmung (25) eingreift, und bei der zum Verschieben des Sperrelementes (8) von der Sperrstellung in die jeweilige Fahrtstellung das Sperrelement (8) auf seiner der Lenkspindel (9) abgewandten Seite mit dem ersten Ende eines mechanischen Bindegliedes (4) verbindbar ist, dessen jeweils zweites Ende mit der Startereinheit (5) des Kraftfahrzeuges verbunden ist, **gekennzeichnet durch** die Merkmale:
a) das Sperrelement (8) ist mit dem ersten Ende des mechanischen Bindegliedes (4) über einen an dem Sperrelement (8) um eine entsprechende Drehachse (13) schwenkbar befestigten Hebel bzw Wippe (14) verbindbar;
b) die Wippe (14) und das Bindeglied (4) weisen hierzu auf den einander zugewandten Seiten entsprechende Formschluß- und/oder Kraftschlußmittel (15,16) auf, die in einer ersten Endstellung der Wippe (14); zum Verschieben des Sperrelementes (8) aus der Sperrstellung in die Fahrtstellung ineinander eingreifen; und
c) die Wippe (14) ist mittels Führungselementen (18,20) derart von der ersten Endstellung in eine zweite Endstellung verschwenkbar, so daß in Sperrstellung des Sperrelementes (8) die Formschluß- und/oder Kraftschlußmittel (15,16) der Wippe (14) und des Bindegliedes (4) außer Eingriff gebracht sind.

2. Verriegelungsvorrichtung nach Anspruch 1, **dadurch gekennzeichnet**, daß zum Verschwenken der Wippe (14) in die zweite Endstellung diese in bezug auf die Drehachse (13) auf der dem Bindeglied (4) abgewandten Seite eine Führungsschräge (20) aufweist, gegen die ein mittels eines Elektromagneten (19) verschiebbares Sperrglied (18) drückt.

3. Verriegelungsvorrichtung nach Anspruch 1 oder 2, **dadurch gekennzeichnet**, daß die Wippe (14) mittels einer Feder in ihrer ersten Endstellung gehalten wird.

4. Verriegelungsvorrichtung nach einem der Ansprüche 1 bis 3, **dadurch gekennzeichnet**, daß das Formschlußmittel und das Kraftschlußmittel eine Ausnehmung (15) und ein Nocken (16) sind, daß die Wippe (14) auf ihrer dem Bindeglied (4) zugewandten Seite eine Ausnehmung (15) aufweist, in die in der ersten Endstellung der Wippe (14) ein an einem Schiebestück (17) des Bindegliedes (4) angeordneter Nocken (16) eingreift.

5. Verriegelungsvorrichtung nach einem der Ansprüche 1 bis 4, **dadurch gekennzeichnet**, daß das Sperrelement (8) eine Ausnehmung (28) aufweist, in die das Sperrglied (18) in der Fahrtstellung des Sperrelementes (8) eingreift.

6. Verriegelungsvorrichtung nach einem der Ansprüche 1 bis 5, **dadurch gekennzeichnet**, daß das Gehäuse (2) der Verriegelungsvorrichtung (1) eine Ausformung (30) aufweist, die derart gewählt ist, daß das in Fahrtstellung verschobene Sperrelement (8) nicht in die zweite Endstellung zurückschwenkbar ist.

7. Verriegelungsvorrichtung nach einem der Ansprüche 1 bis 6, **dadurch gekennzeichnet**, daß die Verriegelungsvorrichtung (1) einen ersten Mikroschalter (21) enthält, der derart angeordnet ist, daß er beim Schwenken der Wippe (14) von ihrer zweiten in ihre erste Stellung mittels eines Schaltnockens (23) betätigbar ist und gegebenenfalls über eine Elektronik (27) die Drehbewegung des Zündschlüssels in der Startereinheit (5) freigibt.

8. Verriegelungsvorrichtung nach einem der Ansprüche 1 bis 7, **dadurch gekennzeichnet**, daß die Verriegelungsvorrichtung (1) einen zweiten Mikroschalter (22) enthält, der beim Überfahren des Sperrelementes (8) von der Fahrt- in die Sperrstellung mittels eines Schaltnockens (24) betätigbar ist und gegebenenfalls über eine Elektronik (27) den Elektromagneten (9) ansteuert, so daß die Wippe (14) über die an ihr angeordnete Führungsschräge (20) verschwenkt wird.

9. Verriegelungsvorrichtung nach Anspruch 8, **dadurch gekennzeichnet**, daß der zweite Mikroschalter (22) beim Überfahren des Sperrelementes (8) von der Sperr- in die Fahrtstellung den Startvorgang des Fahrzeuges einleitet.

10. Verriegelungsvorrichtung nach einem der Ansprüche 1 bis 9, **dadurch gekennzeichnet**, daß es sich bei dem mechanischen Bindeglied (4) um einen Bowdenzug handelt.

11. Verriegelungsvorrichtung nach einem der Ansprüche 1 bis 10, **dadurch gekennzeichnet**, daß das Sperrelement (8) aus einem der Lenkspindel (9) zugewandten Sperrbolzen (10) und einem Mitnehmer (11) besteht, wobei sich der Sperrbolzen (10) in einer öffnung (29) des Mitnehmers (11) federbelastet abstützt.

## Claims

1. Locking device for motor vehicles, in which, for locking, at least one blocking element (8) which [sic] in a blocking position engages in a corresponding recess (25) arranged on the outer perimeter of the steering shaft (9) of the steering column (3) of the motor vehicle, and in which, for moving the blocking element (8) from the blocking position into the respective driving position, the blocking element (8) can be connected, on its side which is remote from the steering shaft (9), to the first end of a mechanical connecting link (4) whose respectively second end is connected to the starting unit (5) of the motor vehicle, characterised by the following features:
a) the blocking element (8) can be connected to the first end of the mechanical connecting link (4) via a lever or rocker (14) which is mounted on the blocking element (8) such that it can pivot about a corresponding rotary spindle (13);
b) for this purpose, the rocker (14) and the connecting link (4) have appropriate shape-interlocking and/or actuated-locking means (15, 16) on the sides which face one another, which in a first end position of the rocker (14) engage in one another to move the blocking element (8) out of the blocking position into the driving position; and
c) the rocker (14) can be pivoted by means of guide elements (18, 20) from the first end position into a second end position such that, in the blocking position of the blocking element (8), the shape-interlocking and/or actuated-locking means (15, 16) of the rocker (14) and of the connecting link (4) are out of engagement.

2. Locking device according to Claim 1, characterised in that, for pivoting the rocker (14) into the second end position, it has a guide slope (20) in relation to the rotary spindle (13) on the side which is remote from the connecting link (4), and a blocking member (18) which can be moved by means of an electromagnet (19) presses against said guide slope (20).

3. Locking device according to Claim 1 or 2, characterised in that the rocker (14) is held in its first end position by means of a spring.

4. Locking device according to one of Claims 1 to 3, characterised in that the shape-interlocking means and the actuated-locking means are a recess (15) and a cam (16), and in that the rocker (14) has a recess (15) on its side which faces the connecting link (4), a cam (16) arranged on a slide piece (17) of the connecting link (4) engaging in said recess (15) in the first end position of the rocker (14).

5. Locking device according to one of Claims 1 to 4, characterised in that the blocking element (8) has a recess (28) in which the blocking member (18) engages in the driving position of the blocking element (8).

6. Locking device according to one of Claims 1 to 5, characterised in that the housing (2) of the locking device (1) has a shaped portion (30) which is chosen such that the blocking element (8) which has been pushed into the driving position cannot be pivoted back into the second end position.

7. Locking device according to one of Claims 1 to 6, characterised in that the locking device (1) contains a first microswitch (21) which is arranged such that it can be actuated by a switching cam (23), and which, via an electronic circuit (27) if appropriate, enables the ignition key to turn in the starting unit (5), when the rocker (14) pivots from its second position into its first position.

8. Locking device according to one of Claims 1 to 7, characterised in that the locking device (1) contains a second microswitch (22) which, when the blocking element (8) travels from the driving position into the blocking position, can be actuated by a switching cam (24) and which, via an electronic circuit (27) if appropriate, drives the electromagnet (9) so that the rocker (14) is pivoted over the guide slope (20) which is arranged on it.

9. Locking device according to Claim 8, characterised in that the second microswitch (22) initiates the procedure for starting the vehicle when the blocking element (8) travels from the blocking position into the driving position.

10. Locking device according to one of Claims 1 to 9, characterised in that the mechanical connecting link (4) is a Bowden cable.

11. Locking device according to one of Claims 1 to 10, characterised in that the blocking element (8) comprises a blocking bolt (10), which faces the steering shaft (9), and a carrier (11), the blocking bolt (10) being supported in an opening (29) in the carrier (11) under spring loading.

## Revendications

1. Dispositif de verrouillage pour véhicules automobiles, dans lequel, pour le verrouillage, au moins un élément de blocage (8) pénètre, dans une position de blocage, dans un évidement (25) correspondant, disposé au niveau de la périphérie extérieure de l'arbre de direction (9) de la colonne de direction (3) du véhicule automobile, et dans lequel, pour le déplacement de l'élément de blocage (8) à partir de la position de blocage pour prendre la position correspondante de marche, l'élément de blocage (8) peut être relié, sur son côté dirigé à l'opposé de l'arbre de direction (9), à la première extrémité d'un organe mécanique de liaison (4), dont la seconde extrémité est chaque fois reliée à l'unité de démarrage (5) du véhicule automobile, caractérisé en ce que :
a) l'élément de blocage (8) peut être relié à la première extrémité de l'organe mécanique de liaison (4) par l'intermédiaire d'un levier, ou bien d'une bascule (14), fixé contre l'élément de blocage (8) de manière à pouvoir tourner autour d'un axe de rotation (13) correspondant ;
b) la bascule (14) et l'organe de liaison (4) présentent, à cet effet, sur leurs côtés dirigés l'un vers l'autre, des moyens à engagement positif et/ou à liaison mécanique (15, 16) qui, dans une première position d'extrémité de la bascule (14), pour le déplacement de l'élément de blocage (8) depuis la position de blocage vers la position de marche, s'engagent mutuellement ; et
c) la bascule (14) peut être amenée à pivoter, à l'aide d'éléments de guidage (18, 20) depuis la première position d'extrémité vers une seconde position d'extrémité, de telle manière que, dans la position de blocage de l'élément de blocage (8), les moyens à liaison mécanique et/ou à engagement positif (15, 16) de la bascule (14) et de l'organe de liaison (4) soient séparés les uns des autres.

2. Dispositif de verrouillage selon la revendication 1, caractérisé en ce que, pour le pivotement de la bascule (14) vers la seconde position d'extrémité, la bascule présente une partie oblique de guidage (20), qui est située sur le côté dirigé à l'opposé de l'organe de liaison (4) par rapport à l'axe de rotation (13), et qui presse contre un organe de blocage (18), qui peut être déplacé à l'aide d'un électro-aimant (19).

3. Dispositif de verrouillage selon la revendication 1 ou 2, caractérisé en ce que la bascule (14) est retenue à l'aide d'un ressort, dans sa première position d'extrémité.

4. Dispositif de verrouillage selon l'une des revendications 1 à 3, caractérisé en ce que le moyen à liaison mécanique et le moyen à engagement positif sont constitués par un évidement (15) et une came (16), en ce que la bascule (14) présente, sur son côté dirigé vers l'organe de liaison (4), un évidement (15) dans lequel pénètre une came (16) située sur une pièce coulissante (17) de l'organe de liaison (4), dans la première position d'extrémité de la bascule (14).

5. Dispositif de verrouillage selon l'une des revendications 1 à 4, caractérisé en ce que l'élément de blocage (8) présente un évidement (28) dans lequel pénètre l'organe de blocage (18), dans la position de marche de l'élément de blocage (8).

6. Dispositif de verrouillage selon l'une des revendications 1 à 5, caractérisé en ce que le boîtier (2) du dispositif de verrouillage (1) présente une partie saillante (30), qui est choisie de telle manière que l'élément de blocage (8), qui a été déplacé pour prendre la position de marche, ne puisse pas revenir par pivotement dans la seconde position d'extrémité.

7. Dispositif de verrouillage selon l'une des revendications 1 à 6, caractérisé en ce que le dispositif de verrouillage (1) comporte un premier microrupteur (21), qui est disposé de telle manière que, lors du pivotement de la bascule (14) de sa deuxième position, vers sa première position, il puisse être actionné à l'aide d'une came de commutation (23) et qu'il puisse autoriser, le cas échéant, par l'intermédiaire d'un dispositif électronique (27), le mouvement de rotation de la clé de contact dans l'unité de démarrage (5).

8. Dispositif de verrouillage selon l'une des revendications 1 à 7, caractérisé en ce que le dispositif de verrouillage (1) comporte un second microrupteur (22) qui, lors du passage de l'élément de blocage (8) de la position de marche à la position de blocage, peut être actionné à l'aide d'une came de commutation (24) et qui commande, le cas échéant, par l'intermédiaire d'un dispositif électronique (27), l'électro-aimant (9) de telle manière que la bascule (14) puisse être amenée à pivoter par l'intermédiaire de la partie oblique de guidage (20) qui lui est associée.

9. Dispositif de verrouillage selon la revendication 8, caractérisé en ce que le second microrupteur (22) lance, lors du passage de l'élément de blocage (8) de la position de blocage à la position de marche, le processus de démarrage du véhicule.

10. Dispositif de verrouillage selon l'une des revendications 1 à 9, caractérisé en ce que, en ce qui concerne l'organe mécanique de liaison (4), il s'agit d'un câble Bowden.

11. Dispositif de verrouillage selon l'une des revendications 1 à 10, caractérisé en ce que l'élément de blocage (8) consiste en un verrou de blocage (10), dirigé vers l'arbre de direction (9), et en un entraîneur (11), le verrou de blocage (10) prenant appui, sous l'action d'un ressort, dans une ouverture (29) de l'entraîneur (11).
